# EUROPEAN PATENT SPECIFICATION

(11) **EP 1 998 398 B1**
(45) Date of publication and mention of the grant of the patent: **23.02.2011**
(21) Application number: 08155121.0
(22) Date of filing: 24.04.2008
(51) Int. Cl.: H01M 8/04, H01M 8/06, H01M 8/12

(54) **Method and apparatus for fueling a solid oxide fuel cell stack**
Verfahren und Vorrichtung zur Brennstoffversorgung eines Festoxidbrennstoffzellenstapels
Procédé et appareil pour fournir du combustible à une pile à combustible à oxyde solide

(30) Priority: 22.05.2007 US 805131
(43) Date of publication of application: 03.12.2008
(73) Proprietor: Delphi Technologies, Inc., Troy, Michigan 48007 (US)
(72) Inventor: Fischer, Bernhard A., Rochester, NY 14618 (US)
(74) Representative: Denton, Michael John

(56) References cited:
- EP-A- 1 557 896
- EP-A- 1 724 869
- EP-A- 1 770 812
- WO-A-03/098728

## Description

### TECHNICAL FIELD

The present invention relates to fuel cells; more particularly, to means for recycling a portion of the anode tail gas of a solid oxide fuel cell (SOFC) stack into a hydrocarbon reformer supplying reformate to the stack; and most particularly, to improved means for such recycling of anode tail gas to increase overall fuel and reforming efficiency.

### BACKGROUND OF THE INVENTION

Fuel cells for combining hydrogen and oxygen to produce electricity are well known. A known class of fuel cells includes a solid-oxide electrolyte layer through which oxygen anions migrate to combine with hydrogen atoms to produce electricity and water; such fuel cells are referred to in the art as "solid-oxide" fuel cells (SOFCs).

In some applications, for example, as an auxiliary power unit (APU) for an automotive vehicle, an SOFC is preferably fueled by "reformate" gas, which is the effluent from a partially oxidizing (CPOx) catalytic hydrocarbon reformer. Reformate typically includes amounts of carbon monoxide (CO) as fuel in addition to molecular hydrogen. The reforming operation and the fuel cell operation may be considered as first and second oxidative steps, respectively, of the hydrocarbon, resulting ultimately in water and carbon dioxide. Both reactions are exothermic, and both are preferably carried out at relatively high temperatures, for example, in the range of 700°C to 1000°C.

CPOx of hydrocarbon fuels benefits from simple design, robust behavior over the whole range of system operability, long durability and life, and low cost manufacturing. However, the CPOx fuel reforming process is inherently limited to relatively low reforming efficiencies in the 70-80% range.

Adiabatic fuel reforming with recycle ingestion, combining exothermic and endothermic reforming sequentially within a single reformer, offers the advantage of recycling unused H₂ and CO within the stack anode tailgas back into the system through the reforming reactor, thus enriching the reformate. It is known in the art to recycle a portion of the tailgas from the stack anodes into the inlet to the reformer, which improves stack power density and system efficiency and reduces carbon precipitation and deposition in the system. A problem with this improvement is that a significant pressure drop occurs from the inlet of the reformer to the outlet of the SOFC stack. Thus, a high-pressure flow source is required in the system to return the anode tailgas to the reformer inlet, which source adds significantly to the cost of the system; and further, control may become unstable under low-flow conditions.

For example, it is disclosed in co-pending application, US 2006/0263657 A1 ("the '657 application") to employ an aspirator or a gas pump to meter the recycled anode tailgas at a steady and controllable flow rate. However, the aspirator requires a high flow volume of an aspirating gas, which causes a parasitic system loss.

The gas pump presents a different problem in that a gas pump which can withstand the exhaust temperatures (ca. 700-850°C) of the stack tailgas must be formed of very expensive high-temperature materials. Therefore, for a presently-practical system employing a relatively inexpensive gas pump, the tailgas is passed through a heat exchanger wherein the temperature is reduced to about 150°C.

Given that in most prior art cases fuel and air are at best moderately pre-heated (ca. 150°C) and the recycle is ingested at a low temperature of about 150°C, the ingestion of cooled tailgas into an adiabatic reactor can have several negative effects:
1. Highest efficiencies cannot be reached because the air flow to the reactor must be increased to prevent the onset of carbon formation and stack deactivation. The amount of air generally dictates the efficiency at the outlet of the reactor because the exothermic reactions of the molecular oxygen in the air with fuel create H₂O and CO₂ rather than H₂ and CO. Maximum efficiencies are around 100% or just above with high recycle flow rates of 30% to 50%.
2. The necessary increase in air flow increases the amount of molecular nitrogen (N₂) flow to the system. Nitrogen is an inert to the system. As part of the fluid, however, it must be heated to reforming temperature without performing any useful work. This represents one of the major loss factors of the fuel cell. Further, large amounts of the nitrogen that was heated to reforming temperature returns with the recycle gas at a low temperature only to be heated again. Nitrogen flows of 50% of the total volumetric reformer flow are not unusual at high rates of recycle. Typical nitrogen flows at CPOx and endothermic reforming are around 35%.
3. The high content of nitrogen in the reformate flow acts as a diluent. This dilution of the reforming gases lowers the rate of diffusion of hydrogen and carbon monoxide to the stack anode. The effect is a decrease in power density of the stack which thus requires either a larger stack or leads to lower stack fuel utilization.
4. Last but not least, the ingestion of large amounts of recycle leads to a breakthrough of parent fuel and C2 or higher hydrocarbons. The increased amount of O₂ to the system together with the large amounts of ingested H₂O and CO₂ keeps the reactor in thermodynamically stable reforming at reforming temperatures well above the carbon formation margin. However, large amounts of unreacted fuel entering the SOFC stack are acceptable only with methane and to some extent with natural gas. The stack cannot tolerate large amounts (5% or more at high recycle rates) of higher hydrocarbons or fuels such as diesel or JP8.
Thus the recycle percentage is limited in the prior art to about 20-25%.

What is needed in the art is a simplified method and apparatus for allowing endothermic reaction of high levels of tailgas recycle to increase the reformer efficiency.

It is a principal object of the present invention to increase the overall fuel efficiency of a CPOx reformer coupled to an SOFC by recycling a relatively high percentage of anode tailgas into the reformer.

WO-A-03/098728 discloses an assembly in accordance with the preamble of claim 1.

### SUMMARY OF THE INVENTION

Briefly described, an SOFC fuel cell stack system in accordance with the invention includes a path for recycling a portion of the SOFC anode tailgas into the inlet of an associated hydrocarbon reformer supplying reformate to the stack. The recycle path includes a controllable pump for varying the flow rate of tailgas. A first heat exchanger is provided ahead of the pump for cooling the tailgas via heat exchange with incoming cathode air, permitting use of an inexpensive gas pump as in the prior art. To facilitate endothermic or steam reforming of hydrocarbons, CO₂, and water in the later portions of the reformer, heat must be increased in the reformer. Some heat may be added back into the tailgas recycle flow stream by installing a second, reversing heat exchanger downstream of the pump. Preferably, the fresh air and fuel being supplied to the reformer is also substantially preheated; and further, the air flow into the reformer is also increased to cause increased exothermic activity (catalytic oxidation and/or combustion) in the early (exothermic) portions of the reformer, thus increasing the amount of heat fed to the endothermic, latter portions of the reformer. The increase in heat supplied to the latter portions of the reformer permits recycling of much larger percentages of tailgas than is allowed by prior art systems, such that overall reformer efficiencies of 130% or greater may be achieved.

### BRIEF DESCRIPTION OF THE DRAWINGS

The present invention will now be described, by way of example, with reference to the accompanying drawings, in which:
FIG. 1 is a schematic drawing of a first prior art embodiment of an SOFC stack system;
FIG. 2 is a schematic drawing of a second prior art embodiment, taken in circle 2,3 in FIG. 1;
FIG. 3 is a schematic drawing of a third prior art embodiment, taken in circle 2,3 in FIG. 1; and
FIG. 4 is a schematic drawing of a first embodiment in accordance with the invention.

### DESCRIPTION OF THE PREFERRED EMBODIMENTS

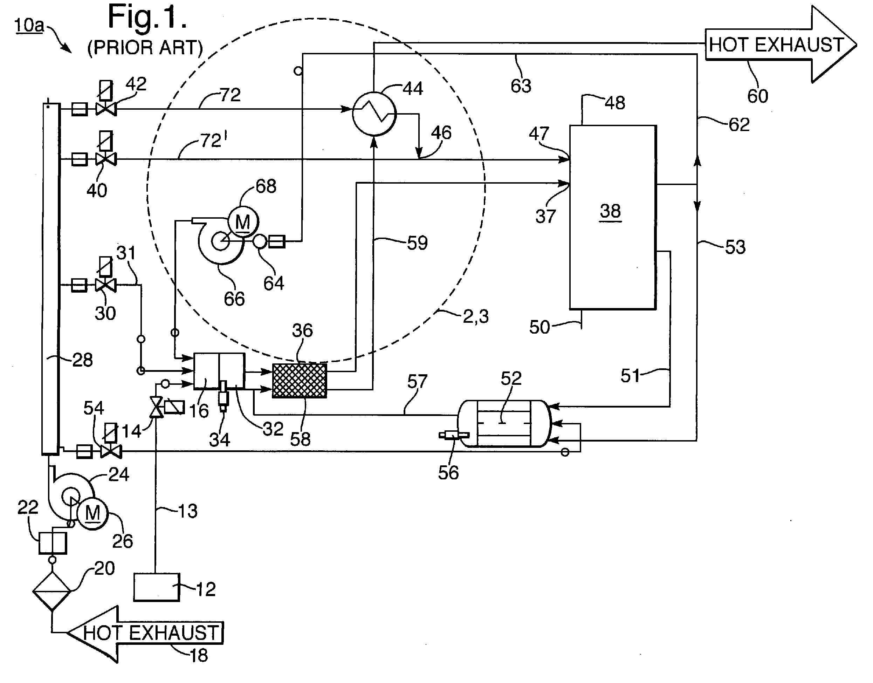

Referring to FIG. 1, in a first prior art embodiment 10a of a solid oxide fuel cell stack assembly, substantially as shown as FIG. 1 of the '657 application, hydrocarbon fuel 13 is supplied from a fuel tank 12 via a control valve 14 to a vaporizing chamber 16. Air 18 is supplied through a filter 20 and a cooling shroud 22 to a main air blower 24 powered by a motor 26. Blower 24 supplies pressurized air to plenum 28. A first air control valve 30 meters air 31 from plenum 28 into vaporizing chamber 16 where the air and fuel are mixed into a vapor mixture which passes into a start-up combustion chamber 32. Chambers 16,32 are structurally part of a catalytic hydrocarbon reformer assembly 36. During cold start-up of the SOFC system, the vapor mixture is ignited by a spark igniter 34 to provide a flow of hot gas through the reformer and the SOFC stack. During normal operation, the vapor mixture is not ignited but rather is passed into reformer 36 wherein the mixture is converted into reformate fuel containing hydrogen and carbon monoxide gases. Reformate is passed across the anode side 37 of SOFC stack 38. Air is supplied from plenum 28 via a second air control valve 40 and a third air control valve 42. Air flowing through third control valve 42 is passed through a cathode air heat exchanger 44 and is tempered as described below. The two air streams are joined 46 and passed to the cathode side 47 of SOFC stack 38. Within stack 38, oxygen from the air is combined with hydrogen and with carbon monoxide in an electrochemical reaction producing an electric potential across a stack anode lead 48 and a stack cathode lead 50. Heated and depleted cathode air 51 is exhausted from stack 38 and passed to a combustor 52. A first portion 53 of anode tailgas exhausted from stack 38 is also passed to combustor 52, and the air/fuel mixture may be augmented by the addition of air from plenum 28 via a fourth control valve 54. The tailgas is ignited by a spark igniter 56 in combustor 52, and the hot exhaust gas 57 is passed through a heat exchanger side 58 of reformer assembly 36 to raise the temperature within the reformer. Exhaust gas 59 from reformer assembly 36 is passed through cathode air heat exchanger 44 to raise the temperature of incoming air and then is exhausted 60 to atmosphere.

Referring still to FIG. 1, a second portion 62 of anode tail gas is provided via a recycle flow leg 63 to an inlet to vaporizing chamber 16 via a check valve 64 and a recycle pump 66 comprising an impeller, shaft, shaft bearing, and sealed impeller housing to physically pump the recycle gas. A controllable electric motor drive 68 powers the impeller via the impeller shaft.

The anode tailgas at the inlet to the pump is at the stack operating temperature range of about 700°C to 850°C, which can present a challenge with respect to providing bearings and seals suitable for use at these temperatures. Further, the motor must be thermally isolated from these temperatures within the pump.

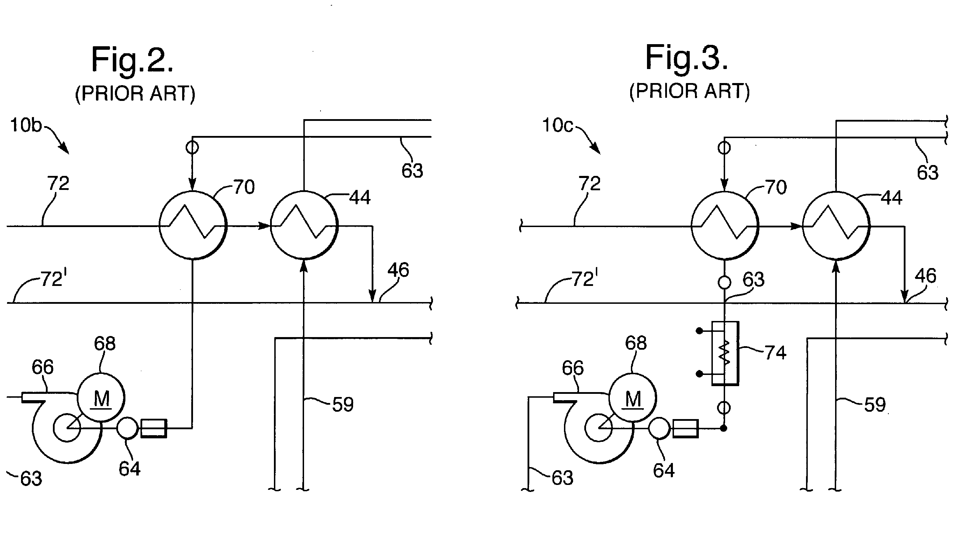

Referring to FIG. 2, in a second prior art embodiment 10b, an anode tailgas cooler in the form of a second heat exchanger 70 is provided in flow leg 63 ahead of primary cathode air heat exchanger 44 in the cathode air flow 72 from valve 42. Anode tailgas portion 62 is passed through one side of exchanger 70, and cathode air 72 is passed through the opposite side. Exchanger 70 reduces the temperature of tailgas 62 to an inlet temperature (tailgas 63) to pump 66 suitable for conventional technology (bearings, seals, motors). Further, this reduction in temperature improves the efficiency of the impeller within the pump by increasing the density of the pumped tailgas.

The cathode air requirement of the system generally tracks with stack power, as does the flow rate of recycle gas 62. This allows a single passive heat exchanger 70 to effectively cool the recycle gas under all operating conditions. Further, because of the high ratio of cathode air mass flow to recycle gas mass flow under all operating conditions, the recycle gas temperature at the pump inlet is fairly insensitive to changes in cathode air flow volume. Both of these are desirable characteristics of the invention.

Under some conditions of off-peak system use, however, tailgas 62 may be cooled to a temperature below what is required for proper pump operations. In fact, because the recycled anode tailgas contains a high water content, it is possible that under such conditions water will be condensed in heat exchanger 70. Because exchanger 70 is a passive device, no direct temperature control is possible. Referring to FIG. 3, in a third prior art embodiment 10c an optional electric heater 74 having a low wattage capability can be installed in or around the line between heat exchanger 70 and check valve 64 and can be controlled to maintain the drybulb temperature of anode tailgas 63 above its dewpoint temperature (typically about 75°C) when entering pump 66, thus preventing sensible water from entering pump 66 and reformer 36.

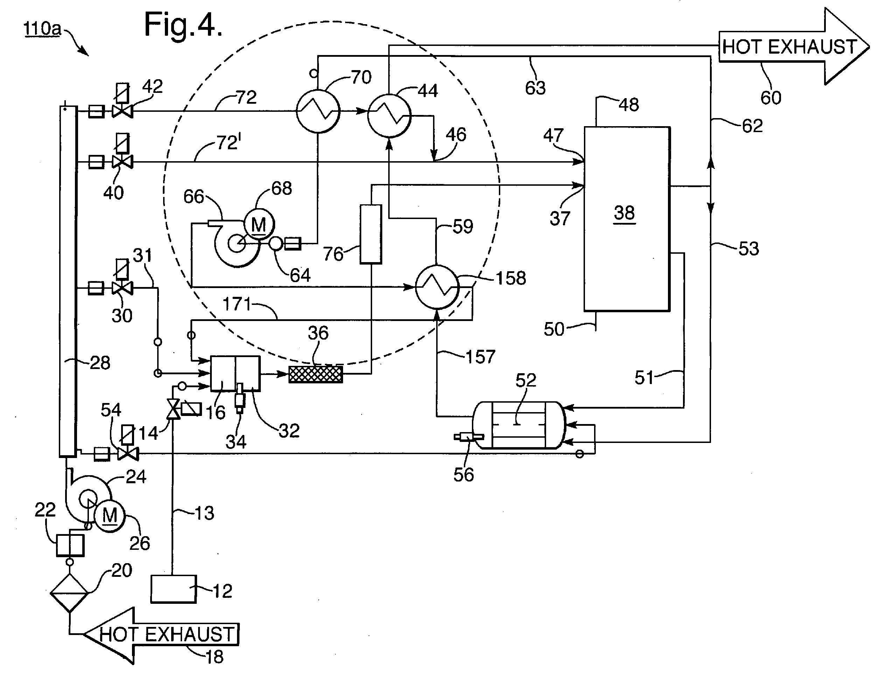

Referring now to FIG. 4, a first improved embodiment 110a is shown in accordance with the invention. Embodiment 110a is largely the same as prior art embodiments 10a,10b,10c and all identical item numbers are shown as in FIGS. 1-3. The difference is that reformer 36 is not provided with a heat exchanger 58; rather a separate heat exchanger 158 is provided to heat incoming tailgas, having a first side for receiving the hot exhaust 157 from combustor 52 which then continues on as exhaust 59, albeit at a somewhat lower temperature, to prior art heat exchanger 44 as in the prior art. The cool tailgas 63 (FIGS. 2-3) from pump 66, cooled by heat exchanger 70 prior to entering pump 66, is directed through the second side of heat exchanger 158 to provide a heated tailgas stream 171 entering into mixing chamber 16 of reformer assembly 36.

It will be seen by those of ordinary skill in the art that embodiment 110a is only one exemplary embodiment for raising the temperature of the cooled anode tailgas 63 between pump 66 and reformer 36. Obviously, other means (not shown) for providing such heating can be heat exchange with the waste heat in anode tailgas stream 53 and/or cathode tailgas 51 . The operative concept in accordance with the invention, which anticipates all such embodiments, is that the temperature of cooled anode tailgas flow 63 is raised before the tailgas is entered into the reformer.

A noted above, increased exothermic activity in the early portions of reformer 36 is also highly desirable. Thus, additional heat exchange or electrical heating (not shown) is preferably provided to either or both of air flow 31 and fuel flow 13 prior to their entry into mixing chamber 16.

Further, the volume of air flow 31 preferably is increased. In order to use large amounts of recycle, on the order of 40% to 60%, a substantial amount of air must be added to the mixture of fuel and recycle to raise the endothermic reforming temperature through exothermic reactions inside the reforming catalyst. This decreases somewhat the reforming and system efficiency but allows operation of the reformer in a thermodynamically stable fashion which avoids the formation of large amounts of carbon and the destruction of the stack. However, another side effect can be the breakthrough of fuel and higher hydrocarbons (if present in the parent fuel) into the fuel cell stack, as well as substantial dilution of the reformate due to the increase in N₂ through the increase in air flow. Water and CO₂ are present in the reformate, but the reforming temperatures are so low that the time to convert the residual hydrocarbons to H₂ and CO is not sufficient. Thus, it is necessary to preheat the recycle as described above, or still better, to also preheat all the reactants prior to injection into the reforming reactor (not shown) as known by those skilled in the art. Preheat of the reactants allows a significant decrease in the amount of air otherwise required to maintain the reforming process within thermodynamically stable boundaries. At high pre-heat of the fuel/air/recycle mixture, the amount of air can even be lower than the air requirement without any recycle addition. The pre-heat, which utilizes exhaust heat, together with the decrease in air volume at high recycle rates of 40% to 60% can deliver reforming efficiencies of greater than 130% and therefore very high system efficiencies. Adiabatic reformer 36 can be a replaceable, inexpensive ceramic catalyst in contrast to a purely endothermic reformer which is very expensive and cannot be serviced or replaced and must therefore be designed to last much longer.

As noted above, breakthrough of fuel and higher hydrocarbons into the SOFC stack can be ruinous to the fuel cell anode. Accordingly, a way to solve the problem of hydrocarbon breakthrough is to add a boost endothermic catalyst 76 in series after adiabatic reactor 36 and ahead of fuel cell stack 38. The boost endothermic reactor is a simple heat change endothermic reactor, as is known in the art and need not be shown or described here, that adds heat to convert any remaining hydrocarbon fuel into H₂ and CO in the presence of large amounts of water and carbon dioxide. Luckily, the present process is not starved of either H₂O or CO₂. The boost catalyst may be a rather small device because the gases do not need to be preheated to reforming temperature (already ca. 800°C from adiabatic reactor 36) and a high space velocity is sufficient to reform the remainder of the fuel and higher hydrocarbons. The required heat addition is small and approximately 0.5kW for a 5kW system. Another benefit is based on the fact that the boost catalyst can be optimized for endothermic/steam reforming only because the reactor will never be challenged with start-up combustion, air, and molecular oxygen, or CPOx and exothermic high temperature reactions. The boost catalyst system does not require a secondary fuel injection system and is therefore inexpensive and easy to implement even as a retrofit, and can be optimized for long durability and life. The boost reactor system can operate with any hydrocarbon fuel, gaseous or liquid, of any type, e.g., gasoline, diesel, JP8, and the like.

## Claims

1. A solid oxide fuel cell stack assembly, comprising:
a) a solid oxide fuel cell stack (38) having an anode (37) and a cathode (47), said stack producing an anode tailgas (53, 62) at an anode outlet;
b) a catalytic reformer (36) for converting hydrocarbon materials into reformate fuel for consumption by said fuel cell stack;
c) a pump (66) disposed between the anode outlet of said fuel cell stack and said reformer for recycling a first portion (62) of said anode tailgas into said reformer;
d) a cooler (70) disposed between said anode outlet and said pump for cooling said first portion of said anode tailgas before passage through said pump; and
e) a heater (158) disposed between said pump and said reformer for heating said first portion of said anode tailgas after passage through said pump;
wherein said cooler includes a heat exchanger defining a first heat exchanger (70) in said assembly, and wherein said first anode tailgas portion (62) is passed through a first side of said first heat exchanger;
**characterized in that** and air is passed through a second side of the first heat exchanger (70); and **in that**
said heater is a heat exchanger, wherein said heat exchanger defines a second heat exchanger (158) in said assembly and said first portion of said anode tailgas is passed through a first side of the second heat exchanger.

2. A solid oxide fuel cell stack assembly in accordance with Claim 1 wherein a heating medium passed through a second side of said second heat exchanger (158) is selected from the group consisting of a second portion (53) of anode tailgas, cathode tailgas (51), and combustor exhaust (157).

3. A solid oxide fuel cell stack assembly in accordance with Claim 1 wherein said pump (66) is selected from the group consisting of an aspirator and a motor-driven gas pump.

4. A solid oxide fuel cell stack assembly in accordance with Claim 1 further comprising an endothermic boost catalyst (76) disposed between said reformer (36) and said fuel cell stack (38).

5. A method for fueling a solid oxide fuel cell stack assembly in accordance with Claim 1, comprising the steps of:
a) supplying a flow of said hydrocarbon fuel to said reformer (36);
b) supplying a flow of air to said hydrocarbon reformer;
c) supplying a flow of anode tailgas (62) from an anode outlet of said solid oxide fuel cell stack (38) to said reformer via a pump (66);
d) cooling (70) said anode tailgas before passing through said pump; and
d) heating (158) said anode tailgas after passing through said pump.

6. A method in accordance with Claim 5 comprising the further step of heating said flow of air to said hydrocarbon reformer (36).

7. A method in accordance with Claim 5 comprising the further step of heating said flow of hydrocarbon fuel to said reformer (36).

8. A method in accordance with Claim 5 wherein said flow of anode tailgas (62) to said reformer (36) is greater than 25% of the total flow of anode tailgas from said anode (37).

9. A method in accordance with Claim 5 wherein said reformer (36) has a reforming efficiency of greater than 80%.

## Patentansprüche

1. Festoxidbrennstoffzellestapel-Baugruppe, die aufweist:
a) einen Festoxidbrennstoffzellestapel (38), der eine Anode (37) und eine Kathode (47) hat, wobei der Stapel ein Anode-Restgas (53, 62) an einem Anode-Auslass erzeugt;
b) einen katalytischen Reformer (36) zum Konvertieren von Kohlenwasserstoff-Materialien in reformierten Brennstoff zum Verbrauch durch den Brennstoffzellestapel;
c) eine Pumpe (66), die zwischen dem Anode-Auslass des Brennstoffzellestapels und dem Reformer angeordnet ist, zum Wiederverwerten bzw. Recycling eines ersten Teils (62) des Anode-Restgases in den Reformer;
d) eine Kühlvorrichtung (70), die zwischen dem Anode-Auslass und der Pumpe angeordnet ist, zum Kühlen des ersten Teils des Anode-Restgases vor einem Durchlauf durch die Pumpe; und
e) eine Heizvorrichtung (158), die zwischen der Pumpe und dem Reformer angeordnet ist, zum Erwärmen des ersten Teils des Anode-Restgases nach einem Durchlauf durch die Pumpe;
wobei die Kühlvorrichtung einen Wärmetauscher umfasst, der einen ersten Wärmetauscher (70) in der Baugruppe definiert, und wobei der erste Anode-Restgas-Teil (62) durch eine erste Seite des ersten Wärmetauschers geleitet wird;
**dadurch gekennzeichnet, dass** Luft durch eine zweite Seite des ersten Wärmetauschers (70) geleitet wird; und dass
die Heizvorrichtung ein Wärmetauscher ist, wobei der Wärmetauscher einen zweiten Wärmetauscher (158) in der Baugruppe definiert, und wobei der erste Teil des Anode-Restgases durch eine erste Seite des zweiten Wärmetauschers geleitet wird.

2. Festoxidbrennstoffzellestapel-Baugruppe gemäß Anspruch 1, wobei ein Wärmemedium, das durch eine zweite Seite des zweiten Wärmetauschers (158) geleitet wird, aus der Gruppe ausgewählt ist, die aus einem zweiten Teil (53) von Anode-Restgas, einem Kathode-Restgas (51) und einem Combustor-Abgas (157) besteht.

3. Festoxidbrennstoffzellestapel-Baugruppe gemäß Anspruch 1, wobei die Pumpe (66) aus der Gruppe ausgewählt ist, die aus einem Aspirator und einer motorbetriebenen Gaspumpe besteht.

4. Festoxidbrennstoffzellestapel-Baugruppe gemäß Anspruch 1, die weiter aufweist einen endothermischen Boost-Katalysator (76), der zwischen dem Reformer (36) und dem Brennstoffzellestapel (38) angeordnet ist.

5. Verfahren zur Brennstoffversorgung einer Festoxidbrennstoffzellestapel-Baugruppe gemäß Anspruch 1, das die Schritte aufweist:
a) Liefern eines Flusses des Kohlenwasserstoff-Brennstoffs an den Reformer (36);
b) Liefern eines Luftstroms an den Kohlenwasserstoff-Reformer;
c) Liefern eines Flusses von Anode-Restgas (62) von einem Anode-Auslass des Festoxidbrennstoffzellestapels (38) über eine Pumpe (66) an den Reformer;
d) Kühlen (70) des Anode-Restgases vor einem Leiten durch die Pumpe;
und
d) Erwärmen (158) des Anode-Restgases nach einem Leiten durch die Pumpe.

6. Verfahren gemäß Anspruch 5, das den weiteren Schritt aufweist eines Erwärmens des Luftstroms an den Kohlenwasserstoff-Reformer (36).

7. Verfahren gemäß Anspruch 5, das den weiteren Schritt aufweist eines Erwärmens des Flusses von Kohlenwasserstoff-Brennstoff an den Reformer (36).

8. Verfahren gemäß Anspruch 5, wobei der Fluss von Anode-Restgas (62) an den Reformer (36) größer ist als 25% des gesamten Flusses von Anode-Restgas von der Anode (37).

9. Verfahren gemäß Anspruch 5, wobei der Reformer (36) eine Reformiereffizienz größer als 80% hat.

## Revendications

1. Ensemble empilé de piles à combustible à oxyde solide, comprenant:
a) un empilement de piles à combustible à oxyde solide (38) ayant une anode (37) et une cathode (47), ledit empilement produisant un gaz résiduaire d'anode (53, 62) à une sortie d'anode ;
b) un reformeur catalytique (36) pour convertir des matériaux hydrocarbures en combustible reformé pour sa consommation par ledit empilement de piles à combustible ;
c) une pompe (66) disposée entre la sortie d'anode dudit empilement de piles à combustible et ledit reformeur pour recycler une première portion (62) dudit gaz résiduaire d'anode vers ledit reformeur ;
d) un dispositif de refroidissement (70) disposé entre ladite sortie d'anode et ladite pompe pour refroidir ladite première portion dudit gaz résiduaire d'anode avant son passage à travers ladite pompe ; et
e) un dispositif de chauffage (158) disposé entre ladite pompe et ledit reformeur pour chauffer ladite première portion dudit gaz résiduaire d'anode après son passage à travers ladite pompe ;
dans lequel ledit dispositif de refroidissement inclut un échangeur de chaleur définissant un premier échangeur de chaleur (70) dans ledit ensemble, et dans lequel ladite première portion (62) du gaz résiduaire d'anode est passée par un premier côté dudit premier échangeur de chaleur ;
**caractérisé en ce que** de l'air est passé par un second côté du premier échangeur de chaleur (70) ; et **en ce que**
ledit dispositif de chauffage est un échangeur de chaleur, ledit échangeur de chaleur définissant un second échangeur de chaleur (158) dans ledit ensemble, et ladite première portion dudit gaz résiduaire d'anode est passée par un premier côté du second échangeur de chaleur.

2. Ensemble empilé de piles à combustible à oxyde solide selon la revendication 1, dans lequel un fluide de chauffage passé par un second côté dudit second échangeur de chaleur (158) est choisi parmi le groupe comprenant une seconde portion (53) du gaz résiduaire d'anode, un gaz résiduaire de cathode (51), et un gaz d'échappement de combustion (157).

3. Ensemble empilé de piles à combustible à oxyde solide selon la revendication 1, dans lequel ladite pompe (66) est choisie parmi le groupe comprenant un aspirateur et une pompe à gaz entraînée par un moteur.

4. Ensemble empilé de piles à combustible à oxyde solide selon la revendication 1, comprenant en outre un catalyseur accélérateur endothermique (76) disposé entre ledit reformeur (36) et ledit empilement de piles à combustible (38).

5. Procédé pour alimenter en combustible un ensemble empilé de piles à combustible à oxyde solide selon la revendication 1, comprenant les étapes consistant à :
a) alimenter un flux de combustible à hydrocarbures vers ledit reformeur (36) ;
b) alimenter un flux d'air audit reformeur d'hydrocarbures ;
c) alimenter un flux de gaz résiduaire d'anode (62) depuis une sortie d'anode dudit empilement de piles à combustible à oxyde solide (38) vers ledit reformeur via une pompe (66) ;
d) refroidir (70) ledit gaz résiduaire d'anode avant son passage à travers ladite pompe ; et
d) chauffer (158) ledit gaz résiduaire d'anode après son passage à travers ladite pompe.

6. Procédé selon la revendication 5, comprenant l'étape supplémentaire consistant à chauffer ledit flux d'air vers ledit reformeur d'hydrocarbures (36).

7. Procédé selon la revendication 5, comprenant l'étape supplémentaire consistant à chauffer ledit flux de combustible à hydrocarbures vers ledit reformeur (36).

8. Procédé selon la revendication 5, dans lequel ledit flux de gaz résiduaire d'anode (62) vers ledit reformeur (36) est supérieur à 25 % du flux total de gaz résiduaire d'anode provenant de ladite anode (37).

9. Procédé selon la revendication 5, dans lequel ledit reformeur (36) présente une efficacité de reformage supérieure à 80 %.
